# EUROPEAN PATENT APPLICATION

(11) **EP 4 545 274 A1**
(43) Date of publication of application: **30.04.2025**
(21) Application number: 24208807.8
(22) Date of filing: 24.10.2024
(51) Int. Cl.: B29C 59/16, B29C 43/36, B29C 43/02, B29C 43/20, B29C 43/28, B29C 43/46, B29C 65/08, B32B 38/06

(54) **SEQUENTIAL SONOTRODES**

(30) Priority: 26.10.2023 US 202363593246 P
(71) Applicant: The Procter & Gamble Company, Cincinnati, OH 45202 (US)
(72) Inventor: SCHNEIDER, Uwe, Cincinnati, 45202 (US); ECKSTEIN, Joseph Allen, Cincinnati, 45202 (US)
(74) Representative: P&G Patent Germany

(57) **Abstract**

Methods of and devices for altering a portion of a substrate may include providing a first device having a radial outer surface and rotating the first device. Nips may be formed between portions of the radial outer surface and a plurality of additional devices, such as sonotrodes. The substrate may be passed through the nips. The additional devices may have angled or curved working surfaces, allowing the devices to be positioned more closely about the radial outer surface of the rotating first device.

## Description

### FIELD

The present disclosure relates generally to altering substrates with ultrasonic energy and more specifically to altering substrates in a plurality of nips formed between a first rotating device and a plurality of sequentially spaced devices comprising sources of ultrasonic energy.

### BACKGROUND

Processes of altering substrates in a nip formed between a first rotating device and a second device comprising sources of ultrasonic energy are generally known. It has been discovered that about 50% of heat transferred to a substrate may be lost in just 10 milliseconds after a substrate passes through the nip. A need exists to prolong exposure to the ultrasonic energy imparted to the substrate by a second device, like a sonotrode. The discussion of shortcomings and needs existing in the field prior to the present disclosure is in no way an admission that such shortcomings and needs were recognized by those skilled in the art prior to the present disclosure.

### SUMMARY

Various embodiments solve the above-mentioned problems and provide methods and devices useful for prolonging exposure to the ultrasonic energy imparted to the substrate by forming a plurality of nips between a first rotating device and a plurality of sequentially spaced devices comprising sources of ultrasonic energy. More specifically, various embodiments relate to a method of altering a portion of a substrate. The method may comprise providing a first device comprising a radial outer surface. The method may comprise rotating the first device. The method may comprise providing a second device comprising a source of vibration energy. The second device may have a first working surface positioned proximate to a first portion of the radial outer surface. The second device may have a first central longitudinal axis. The first working surface may be generally planar in a direction generally perpendicular to the first central longitudinal axis. The method may comprise providing a third device comprising a source of vibration energy. The third device may have a second working surface positioned proximate to a second portion of the radial outer surface. The third device may have a second central longitudinal axis. The second working surface may be generally planar and may extend in a direction not perpendicular to the second central longitudinal axis but generally tangent to the second portion of the radial outer surface. A downstream end of the first working surface may be positioned within about 3mm or less in a machine direction MD of an upstream end of the second working surface. The third device may be positioned downstream of the second device. The method may comprise providing a first nip between the second device and the first portion of the radial outer surface of the first device. The method may comprise providing a second nip between the third device and the second portion of the radial outer surface of the first device. The method may comprise conveying a substrate on the rotating first device through the first nip and through the second nip to alter the portion of the substrate. The method may comprise providing a fourth device comprising a source of vibration energy. The fourth device may have a third working surface positioned proximate to a third portion of the radial outer surface. The third portion of the radial outer surface may be positioned upstream of the first portion of the radial outer surface. The fourth device may have a third central longitudinal axis. The third working surface may be generally planar and may extend in a direction not perpendicular to the third central longitudinal axis but generally tangent to the third portion of the radial outer surface. A downstream end of the third working surface may be positioned within about 3mm or less in the machine direction MD of an upstream end of the first working surface. The fourth device may be positioned upstream of the second device. The method may comprise providing a third nip between the fourth device and the third portion of the radial outer surface. The method may comprise conveying the substrate on the rotating first device through the third nip to alter the portion of the substrate. The method may comprise imparting thermal energy to a portion of the substrate upstream of the first nip to heat the portion of the substrate to a temperature near or below a melting temperature of the portion of the substrate. The substrate may comprise more than one layers or more than one material. The method may comprise providing a plurality of recesses in the radial outer surface of the first device. The recesses may have a shape configured to produce protrusions in the altered areas. The second device and the third device may each comprise a blade sonotrode.

Various embodiments relate to a method of altering a portion of a substrate. The method may comprise providing a first device comprising a radial outer surface. The method may comprise rotating the first device. The method may comprise providing a second device comprising a source of vibration energy. The second device may have a first working surface positioned proximate to a first portion of the radial outer surface. The second device may have a first central longitudinal axis. The first working surface may be not perpendicular to the first central longitudinal axis but generally planar in a direction generally tangent to the first portion of the radial outer surface. The method may comprise providing a third device comprising a source of vibration energy. The third device may have a second working surface positioned proximate to a second portion of the radial outer surface. The third device may have a second central longitudinal axis. The second working surface may be not perpendicular to the second central longitudinal axis but generally planar and may extend in a direction generally tangent to the second portion of the radial outer surface. A downstream end of the first working surface may be positioned within about 3mm or less in a machine direction MD of an upstream end of the second working surface. The third device may be positioned downstream of the second device. The method may comprise providing a first nip between the second device and the first portion of the radial outer surface of the first device. The method may comprise providing a second nip between the third device and the second portion of the radial outer surface of the first device. The method may comprise conveying a substrate on the rotating first device through the first nip and through the second nip to alter the portion of the substrate. The second device and the third device may each comprise a blade sonotrode.

Various embodiments relate to a method of altering a portion of a substrate. The method may comprise providing a first device comprising a radial outer surface. The method may comprise rotating the first device. The method may comprise providing a second device comprising a source of vibration energy. The second device may have a first working surface positioned proximate to a first portion of the radial outer surface. The second device may have a first central longitudinal axis. The first working surface comprising a concave portion to generally mimic the first portion of the radial outer surface. The method may comprise providing a first nip between the second device and the first portion of the radial outer surface of the first device. The method may comprise conveying a substrate in a machine direction MD on the rotating first device through the first nip to alter the portion of the substrate. The method may comprise providing a third device comprising a source of vibration energy. The third device may have a second working surface positioned proximate to a second portion of the radial outer surface. The third device may have a first central longitudinal axis. The second working surface comprising a second concave portion to generally mimic the second portion of the radial outer surface. A downstream end of the first working surface may be positioned within about 3mm or less in a machine direction MD of an upstream end of the second working surface. The third device may be positioned downstream of the second device. The method may comprise providing a second nip between the third device and the second portion of the radial outer surface of the first device. The method may comprise conveying the substrate on the rotating first device through the second nip to alter the portion of the substrate. The first working surface may have a longest dimension D extending in a cross-machine direction CD. The first working surface may have a longest dimension D extending in the machine direction MD.

Various embodiments relate to a method of altering a portion of a substrate. The method may comprise providing a first device comprising a radial outer surface. The method may comprise rotating the first device. The method may comprise providing a second device comprising a source of vibration energy. The second device may have a first working surface positioned proximate to a first portion of the radial outer surface. The second device may have a first central longitudinal axis. The first working surface may be generally planar in a direction generally perpendicular to the first central longitudinal axis. The method may comprise providing a third device comprising a source of vibration energy. The third device may have a second working surface directed toward the second device proximal to the first working surface and positioned upstream of the first portion of the radial outer surface. The third device may have a second central longitudinal axis that may be generally perpendicular or transverse to the first central longitudinal axis of the second device. The second working surface may be generally planar and may extend in a direction generally perpendicular to the second central longitudinal axis. The method may comprise providing a first nip between the first working surface of the second device and the first portion of the radial outer surface of the first device. The method may comprise providing a second nip between a side of the third device and a second portion of the radial outer surface of the first device. The method may comprise conveying a substrate on the rotating first device through the second nip and through the first nip to alter the portion of the substrate. The second nip may be positioned upstream in a machine direction MD from the first nip. The second nip may be positioned downstream in a machine direction MD from the first nip. The second device and the third device may each comprise a blade sonotrode.

Various embodiments relate to a method of altering a portion of a substrate. The method may comprise providing a first device comprising a radial outer surface. The method may comprise rotating the first device. The method may comprise providing a second device comprising a source of vibration energy. The second device may have a first working surface positioned proximate to a first portion of the radial outer surface. The second device may have a first central longitudinal axis. The first working surface may be generally planar in a direction generally perpendicular to the first central longitudinal axis. The method may comprise providing a third device comprising a source of vibration energy. The third device may have a second working surface positioned proximate to a second portion of the radial outer surface. The third device may have a second central longitudinal axis. The second working surface may be generally planar and may extend in a direction generally perpendicular to the second central longitudinal axis. The second working surface may be positioned downstream in a machine direction MD from the first working surface. The first working surface and the second working surface both extend further in a cross-machine direction CD than in the machine direction MD. A downstream end of the first working surface may be positioned within about 3mm or less in the machine direction MD of an upstream end of the second working surface. The method may comprise providing a first nip between the second device and the first portion of the radial outer surface of the first device. The method may comprise providing a second nip between the third device and the second portion of the radial outer surface of the first device. The method may comprise conveying a substrate on the rotating first device through the first nip and through the second nip to alter the portion of the substrate. The first working surface only partially overlaps the second working surface in the cross-machine direction CD. The second device and the third device may each comprise a blade sonotrode.

These and other features, aspects, and advantages of various embodiments will become better understood with reference to the following description, figures, and claims.

### BRIEF DESCRIPTION OF THE DRAWINGS

Many aspects of this disclosure can be better understood with reference to the following figures, which illustrate examples according to various embodiments.
FIG. 1A is a schematic side view of a method according to various embodiments, utilizing one flat and one angled sonotrode.
FIG. 1B is an enlarged view of a portion of FIG. 1A.
FIG. 2A is a schematic side view of a method according to various embodiments, utilizing one flat and two angled sonotrodes.
FIG. 2B is an enlarged view of a portion of FIG. 2A.
FIG. 3A is a schematic side view of a method according to various embodiments, utilizing no flat and two angled sonotrodes.
FIG. 3B is an enlarged view of a portion of FIG. 3A.
FIG. 4A is a schematic side view of a method according to various embodiments, utilizing two sonotrodes having curved working surfaces.
FIG. 4B is an enlarged view of a portion of FIG. 4A.
FIG. 5A is a schematic side view of a method according to various embodiments, utilizing three sonotrodes having curved working surfaces.
FIG. 5B is an enlarged view of a portion of FIG. 5A.
FIG. 6 is a schematic side view of a method according to various embodiments, utilizing the working surface of one sonotrode and the side of another sonotrode.
FIG. 7A is a perspective view of a sonotrode having a flat working surface.
FIG. 7B is a perspective view of a sonotrode having a curved working surface.
FIG. 7C is a perspective view of a sonotrode having an angled working surface.
FIG. 7D is a perspective view of a sonotrode having a curved and angled working surface.
FIG. 8A is a perspective view of a sonotrode having an elongated working surface.
FIG. 8B is a perspective view of a sonotrode having a winged working surface.
FIG. 8C is a perspective view of a sonotrode having a partially winged working surface.
FIG. 9 is a perspective view of a method according to various embodiments, utilizing a pair of overlapping sonotrodes of the type shown in FIG. 8A.
FIG. 10 is a perspective view of a method according to various embodiments, utilizing a pair of overlapping sonotrodes of the type shown in FIG. 8B.
FIG. 11 is a perspective view of a method according to various embodiments, utilizing a pair of overlapping sonotrodes of the type shown in FIG. 8C.
FIG. 12A is a schematic side view of a method according to various embodiments, utilizing a sonotrode having working surface curved in the machine direction.
FIG. 12B is a perspective view of a sonotrode shown in FIG. 12A.
FIG. 13 is a graph providing details of the discovery of a rapid decrease in temperature of a substrate after leaving a nip.

It should be understood that the various embodiments are not limited to the examples illustrated in the figures.

### DETAILED DESCRIPTION

### Introduction and Definitions

This disclosure is written to describe the invention to a person having ordinary skill in the art, who will understand that this disclosure is not limited to the specific examples or embodiments described. The examples and embodiments are single instances of the invention which will make a much larger scope apparent to the person having ordinary skill in the art. Unless defined otherwise, all technical and scientific terms used herein have the same meaning as commonly understood by the person having ordinary skill in the art. It is also to be understood that the terminology used herein is for the purpose of describing examples and embodiments only, and is not intended to be limiting, since the scope of the present disclosure will be limited only by the appended claims.

All the features disclosed in this specification (including any accompanying claims, abstract, and drawings) may be replaced by alternative features serving the same, equivalent, or similar purpose, unless expressly stated otherwise. Thus, unless expressly stated otherwise, each feature disclosed is one example only of a generic series of equivalent or similar features. The examples and embodiments described herein are for illustrative purposes only and that various modifications or changes in light thereof will be suggested to the person having ordinary skill in the art and are to be included within the spirit and purview of this application. Many variations and modifications may be made to the embodiments of the disclosure without departing substantially from the spirit and principles of the disclosure. All such modifications and variations are intended to be included herein within the scope of this disclosure. For example, unless otherwise indicated, the present disclosure is not limited to particular materials, reagents, reaction materials, manufacturing processes, or the like, as such can vary. It is also to be understood that the terminology used herein is for purposes of describing particular embodiments only and is not intended to be limiting. It is also possible in the present disclosure that steps can be executed in different sequence where this is logically possible.

All numeric values are herein assumed to be modified by the term "about," whether or not explicitly indicated. The term "about" generally refers to a range of numbers that one of skill in the art would consider equivalent to the recited value (for example, having the same function or result). In many instances, the term "about" may include numbers that are rounded to the nearest significant figure.

In everyday usage, indefinite articles (like "a" or "an") precede countable nouns and noncountable nouns almost never take indefinite articles. It must be noted, therefore, that, as used in this specification and in the claims that follow, the singular forms "a," "an," and "the" include plural referents unless the context clearly dictates otherwise. Thus, for example, reference to "a support" includes a plurality of supports. Particularly when a single countable noun is listed as an element in a claim, this specification will generally use a phrase such as "a single." For example, "a single support."

Unless otherwise specified, all percentages indicating the amount of a component in a composition represent a percent by weight of the component based on the total weight of the composition.

Where a range of values is provided, it is understood that each intervening value, to the tenth of the unit of the lower limit (unless the context clearly dictates otherwise), between the upper and lower limit of that range, and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

In this specification and in the claims that follow, reference will be made to a number of terms that shall be defined to have the following meanings unless a contrary intention is apparent.

"Machine direction" refers to the specific orientation or path along which the material or object is intended to move through a processing apparatus or system. The machine direction is typically established at the beginning of the processing operation, and it represents the primary direction of material flow through the machine or process.

"Cross direction" or "cross-machine direction" (CD) refers to a direction that is generally perpendicular to the machine direction.

"Downstream" is used to describe the direction that follows the machine direction. It denotes the path or orientation in which the material or product continues to progress through the processing system after having undergone the primary operations or treatments in the machine direction.

"Upstream" refers to the direction that precedes the machine direction. It denotes the path or orientation in which the material or product enters the processing system or machine before undergoing the primary operations or treatments in the machine direction.

"Generally planar" refers to a surface or structure that is mostly flat or level, with only minor variations or deviations from a perfectly flat plane. The term allows for slight deviations or irregularities that do not significantly depart from its overall flatness.

"Extending in a direction" indicates a spatial expansion or progression of an object, component, or feature along a specified path or course. This phrase conveys that a particular element or structure has a characteristic of stretching, spreading, or continuing in a specific orientation or trajectory within a defined space.

"Generally tangent" refers to a relationship between two objects or entities, including imaginary lines, when they touch or nearly touch along a curved line or a curved surface, without intersecting or crossing to a significant degree. The term allows for minor deviations or variations from perfect tangency but excludes substantial overlap or intersection.

"Generally perpendicular" describes a relationship between two lines, surfaces, or objects in which they intersect or meet at a 90-degree angle or very close to it. This term implies a high degree of orthogonality in their alignment, although there may be slight variations from a perfect 90-degree angle.

"Generally mimic" in the context of the shape of one object means that the first object is designed or structured to closely replicate the shape of the second object, with a deliberate effort to align its contours and surfaces as closely as possible to the contours and surfaces of the second object. This replication is such that the first object closely adheres to the overall shape and form of the second object, with particular attention to maintaining parallelism and correspondence in the contours and surfaces, resulting in a high degree of similarity in their shapes. According to various embodiments, the shape of working surface of a device, such as a sonotrode, may generally mimic the shape of a device such as an anvil, such that a nip formed therebetween has a uniform dimension. In other words, the distance between the working surface and the anvil may be substantially the same along the entire working surface in a machine direction and a cross direction.

Including this definition in the patent specification helps clarify that "upstream" refers to the direction before the primary processing steps and serves to establish a clear context for understanding the material flow within the described invention or process.

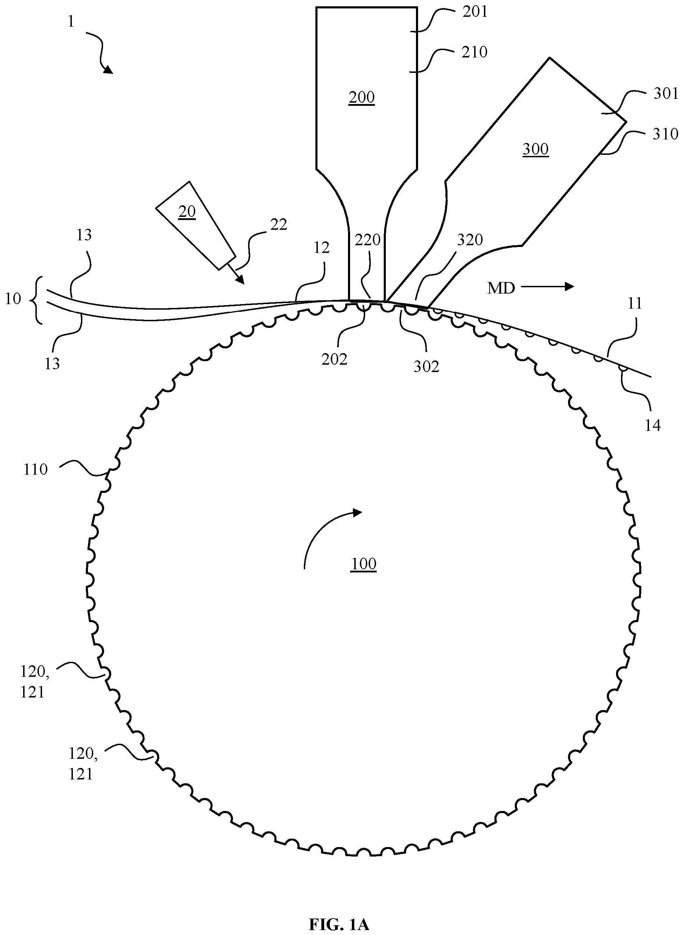

FIG. 1A is a schematic side view of a method 1 according to various embodiments, utilizing one flat sonotrode 201 and one angled sonotrode 301. A first device 100 may comprise a radial outer surface 110, which may comprise a plurality of recesses 120. Each of the recess is 120 may have a shape 121. A second device 200 comprising a source of vibration energy 210 and a working surface 220 may be positioned relative to the first device 100 such that a first nip 202 is formed between the working surface 220 and the radial outer surface 110 of the first device 100. Similarly, a third device 300 comprising a source of vibration energy 310 and a working surface 320 may be positioned relative to the first device 100 such that a second nip 302 is formed between the working surface 320 and the radial outer surface 110 of the first device 100. As illustrated, the second device 200 may be a sonotrode 201 and the third device 300 may also be a sonotrode 301. A substrate 10 may comprise one or more layers or materials 13. The substrate 10 may be passed in a machine direction MD through the first nip 202 and subsequently through the second nip 302. The second device 200 and the third device 300 may impart vibrational energy to the substrate 10 causing the substrate 10 to soften and/or to melt to fill, or at least partially fill, one or more of the plurality of recesses 120 in the radial outer surface 110 of the first device 100. The softened or melted portions of the substrate 10 that fill the one or more recesses 120 may take on the shape 121 of the recesses 120. Upon exiting the first nip 202 and the second nip 302 the softened or melted portions of the substrate 10 make cool and harden. Thus, an altered portion 11 of the substrate 10 may be formed that comprises any of a variety of bonds, deformations, indentations, or for example shaped protrusions 14. Since the formation of the altered portion 11 of the substrate 10 depends on softening or melting the substrate it may be beneficial according to various embodiments to provide a heating device 20 that is capable of imparting thermal energy 22 to the substrate 10 to preheat a portion 12 of the substrate 10 before the substrate 10 passes into the first nip 202 and or the second nip 302. The heating device 20 may emit heated air or electromagnetic energy to impart the thermal energy 22 to the substrate 10.

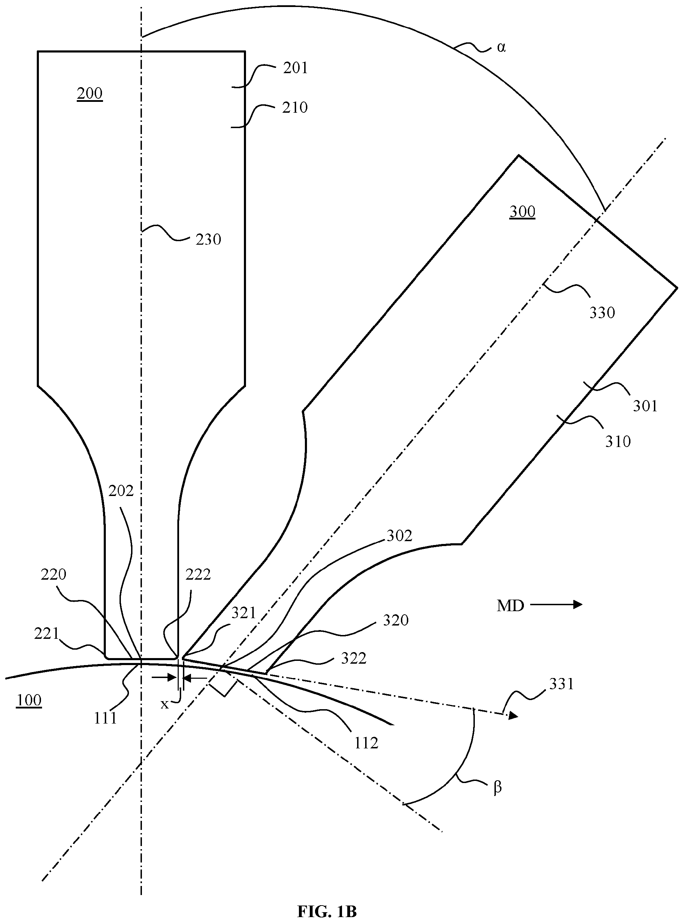

FIG. 1B is an enlarged view of a portion of FIG. 1A. As can be seen, the first nip 202 may be formed between the first working surface 220 of the second device 200 and a first portion 111 of the radial outer surface 110. Similarly, the second nip 302 may be formed between the second working surface 320 of the third device 300 and a second portion 112 of the radial outer surface 110. The first working surface 220 many comprise an upstream and 221 and a downstream end 222. Similarly, the second working surface 320 may comprise an upstream end 321 and a downstream end 322. The downstream end 222 of the first working surface 220 may be upstream from the upstream end 321 of the second working surface 320. The downstream end 222 may be separated from the upstream end 321 by a distance x. The distance x may be in a range of from about 0mm to about 5mm, about 0.5mm to about 4.5mm, about 1mm to about 4mm, about 1.5mm to about 3.5mm, about 2mm to about 3mm, or about 2.5mm to about 3.5mm, or about 3mm. The second device 200 may comprise a first central longitudinal axis 230 and the third device 300 may comprise a second central longitudinal axis 330, which may be separated by an angle α. The angle α may be from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees. The first working surface 220 of the second device 200 may be generally perpendicular to the first central longitudinal axis 230 and approximately tangent to the first portion 111 of the radial outer surface. The second working surface 320 may be generally planar and may extend in a direction 331 not perpendicular to the second central longitudinal axis 330 but generally tangent to the second portion 112 of the radial outer surface 110. The direction 331 may be at an angle β relative to a line that is perpendicular to the second central longitudinal axis 330. The angle β may be from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees.

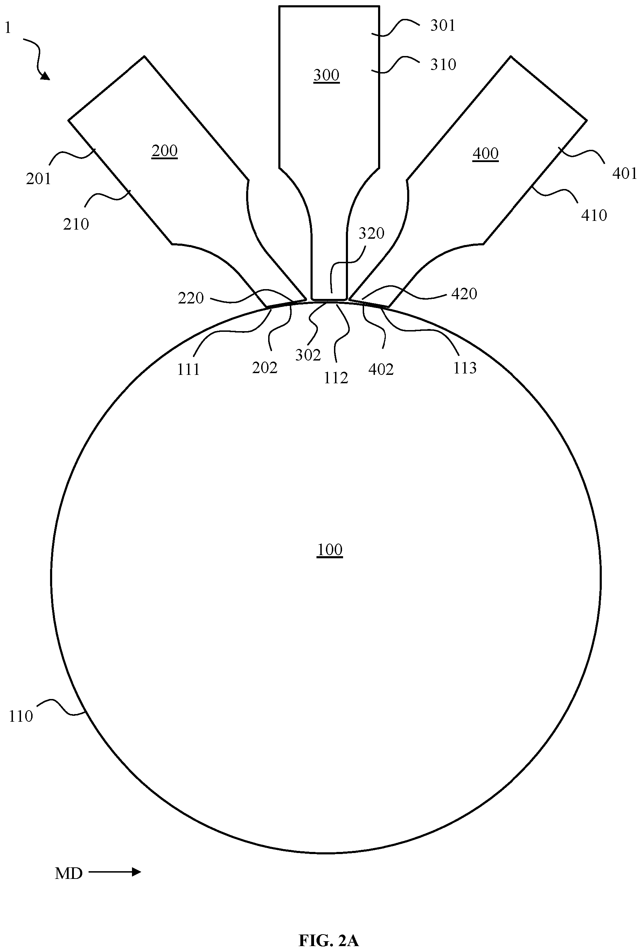

FIG. 2A is a schematic side view of a method 1 according to various embodiments, utilizing one flat sonotrode 301 and two angled sonotrodes 201, 401. In this variation, a first nip 202 may be formed between a first portion 111 of a radial outer surface 110 of a first device 100 and a first working surface 220 of a second device 200, a second nip 302 may be formed between a second portion 112 of a radial outer surface 110 of the first device 100 and a second working surface 320 of a third device 300, and finally a third nip 402 may be formed between a third portion 113 of a radial outer surface 110 of the first device 100 and a third working surface 420 of a fourth device 400. A substrate 10 (not shown) may be passed through all three nips in a machine direction. The second device 200 may comprise a first source of vibration energy 210. The second device 200 may be a sonotrode 201, for example. The third device 300 may comprise a second source of vibration energy 310. The third device 300 may be a sonotrode 301, for example. The fourth device 400 may comprise a third source of vibration energy 410. The fourth device 400 may be a sonotrode 401, for example. Although not shown, it is to be appreciated that the radial outer surface 110 of the first device 100 may comprise a plurality of recesses 120 as already illustrated in FIG. 1A, which is true for the radial outer surfaces 110 of all first devices 100 illustrated in this disclosure.

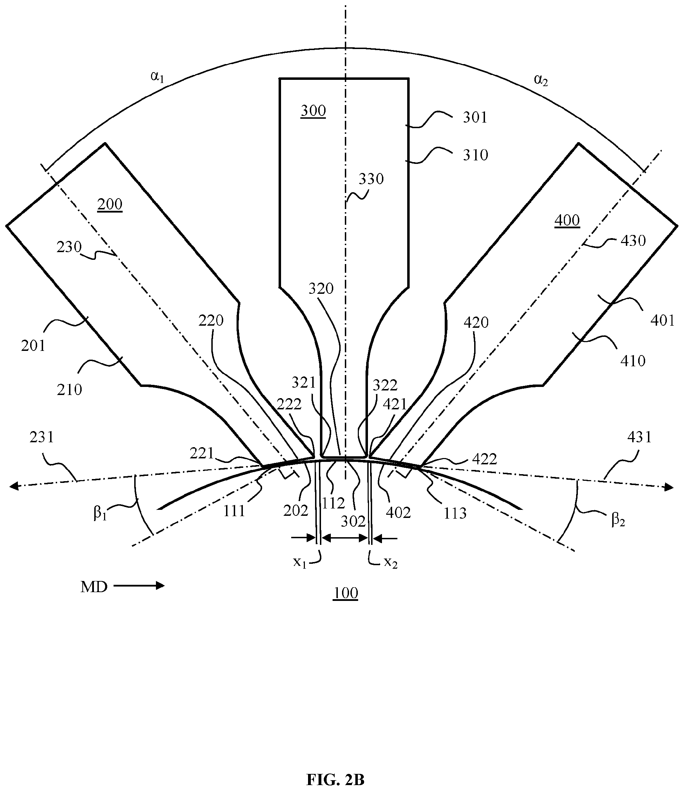

FIG. 2B is an enlarged view of a portion of FIG. 2A. As illustrated, the first working surface 220 of the second device 200 may comprise an upstream end 221 and a downstream end 222. Similarly, the second working surface 320 of the third device 300 may comprise an upstream end 321 and a downstream end 322. The third working surface 420 of the fourth device 400 may comprise an upstream end 421 and a downstream end 422. The downstream end 222 of the second device 200 may be upstream of the upstream and 321 of the third device 300 and may be separated therefrom by a distance x1. Similarly, the downstream end 322 of the third device 300 may be upstream of the upstream and 421 of the fourth device 400 and may be separated therefrom a distance x2. The distances x1 and x2 may be the same or different. Each distance x1 and x2 may be in a range of from about 0mm to about 5mm, about 0.5mm to about 4.5mm, about 1mm to about 4mm, about 1.5mm to about 3.5mm, about 2mm to about 3mm, or about 2.5mm to about 3.5mm, or about 3mm.

The second device 200 may comprise a first central longitudinal axis 230 and the third device 300 may comprise a second central longitudinal axis 330, which may be separated by an angle α1. The 4th device 400 may comprise a third central longitudinal axis 430, which may be separated from the second central longitudinal axis 330 by an angle α2. The angles α1 and α2 may be the same or different and each may be in a range of from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees.

The first working surface 220 may be generally planar and may extend in a direction 231 not perpendicular to the first central longitudinal axis 230 but generally tangent to the first portion 111 of the radial outer surface 110. The second working surface 320 of the third device 300 may be generally perpendicular to the second central longitudinal axis 330 and approximately tangent to the second portion 112 of the radial outer surface 110. The third working surface 420 may be generally planar and may extend in a direction 431 not perpendicular to the third central longitudinal axis 430 but generally tangent to the third portion 113 of the radial outer surface 110. The direction 231 may be at an angle β1 relative to a line that is perpendicular to the first central longitudinal axis 230. The direction 431 may be at an angle β2 relative to a line that is perpendicular to the third central longitudinal axis 430. The angles β1 and β2 may be the same or different and may be from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees.

It can be seen, therefore, with reference to FIGs. 1A, 1B, 2A, and 2B, that various embodiments relate to a method 1 of altering a portion 11 of a substrate 10. The method 1 may comprise providing a first device 100 comprising a radial outer surface 110. The method 1 may comprise rotating the first device 100. The method 1 may comprise providing a second device 200 comprising a source of vibration energy 210. The second device 200 may have a first working surface 220 positioned proximate to a first portion 111 of the radial outer surface 110. The second device 200 may have a first central longitudinal axis 230. The first working surface 220 may be generally planar in a direction 231 generally perpendicular to the first central longitudinal axis 230. The method 1 may comprise providing a third device 300 comprising a source of vibration energy 310. The third device 300 may have a second working surface 320 positioned proximate to a second portion 112 of the radial outer surface 110. The third device 300 may have a second central longitudinal axis 330. The second working surface 320 may be generally planar and may extend in a direction 331 not perpendicular to the second central longitudinal axis 330 but generally tangent to the second portion 112 of the radial outer surface 110. A downstream end 222 of the first working surface 220 may be positioned within about 3mm or less in a machine direction MD of an upstream end 321 of the second working surface 320. The third device 300 may be positioned downstream of the second device 200. The method 1 may comprise providing a first nip 202 between the second device 200 and the first portion 111 of the radial outer surface 110 of the first device 100. The method 1 may comprise providing a second nip 302 between the third device 300 and the second portion 112 of the radial outer surface 110 of the first device 100. The method 1 may comprise conveying a substrate 10 on the rotating first device 100 through the first nip 202 and through the second nip 302 to alter the portion of the substrate 10. The method 1 may comprise providing a fourth device 400 comprising a source of vibration energy 410. The fourth device 400 may have a third working surface 420 positioned proximate to a third portion 113 of the radial outer surface 110. The third portion 113 of the radial outer surface 110 may be positioned upstream of the first portion 111 of the radial outer surface 110. The fourth device 400 may have a third central longitudinal axis 430. The third working surface 420 may be generally planar and may extend in a direction 431 not perpendicular to the third central longitudinal axis 430 but generally tangent to the third portion 113 of the radial outer surface 110. A downstream end 322 of the third working surface 320 may be positioned within about 3mm or less in the machine direction MD of an upstream end 221 of the first working surface 220. The fourth device 400 may be positioned upstream of the second device 200. The method 1 may comprise providing a third nip 402 between the fourth device 400 and the third portion 113 of the radial outer surface 110. The method 1 may comprise conveying the substrate 10 on the rotating first device 100 through the third nip 402 to alter the portion 11 of the substrate 10. The method 1 may comprise imparting thermal energy to a portion 12 of the substrate 10 upstream of the first nip 202 to heat the portion 12 of the substrate 10 to a temperature near or below a melting temperature of the portion 12 of the substrate 10. The substrate 10 may comprise more than one layers 13 or more than one material. The method 1 may comprise providing a plurality of recesses 120 in the radial outer surface 110 of the first device 100. The recesses 120 may have a shape 121 configured to produce protrusions 14 in the altered areas 11. The second device 200 and the third device 300 may each comprise a blade sonotrode 201, 301.

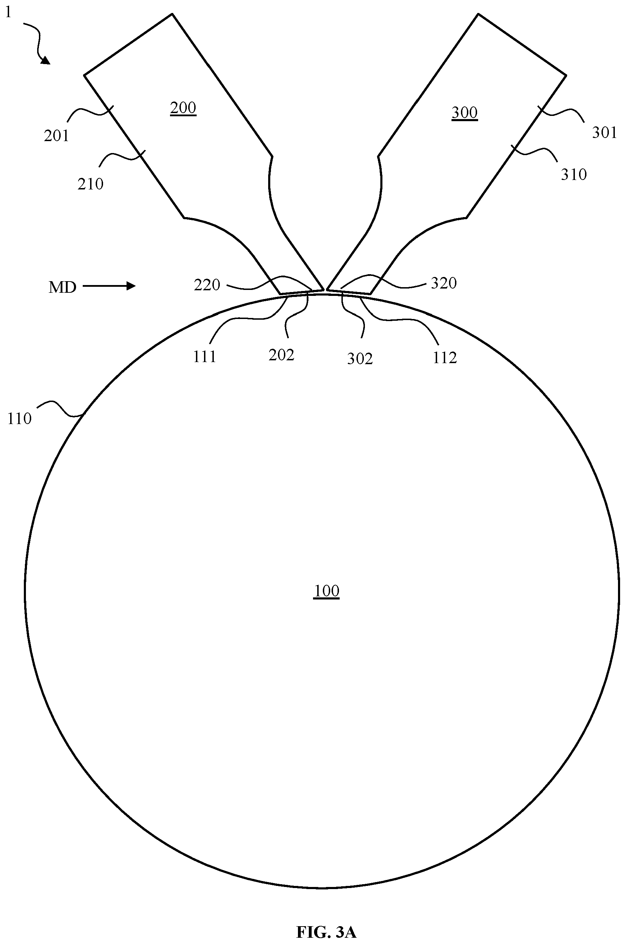

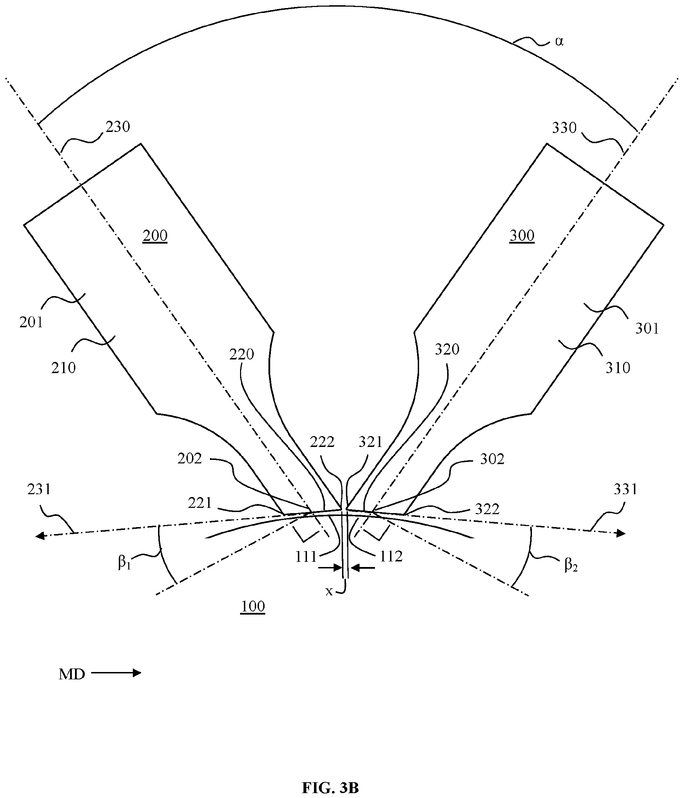

FIG. 3A and 3B cooperate to illustrate one embodiment. FIG. 3A is a schematic side view of a method 1 according to various embodiments, utilizing no flat and two angled sonotrodes 201, 301. A first nip 202 may be formed between a first working surface 220 of a second device 200 and a first portion 111 of a radial outer surface 110 of a first device 100. Similarly, a second nip 302 may be formed between a second working surface 320 of a third device 300 and a second portion 112 of the radial outer surface 110 of the first device 100. A substrate 10 (not shown) may be passed in a machine direction between the first nip 202 and the second nip 302. As in all cases, the second device 200 and the third device 300 may comprise sources of vibration energy 210, 310 and may be, for example, sonotrodes 201, 301.

FIG. 3B is an enlarged view of a portion of FIG. 3A. The first working surface 220 of the second device 200 may comprise an upstream end 221 and a downstream end 222. The second working surface 320 of the third device 300 may comprise an upstream end 321 and a downstream end 322. The downstream end 222 of the second device 200 may be upstream from the upstream end 321 of the third device 300 and may be separated therefrom by a distance x. The distance x may be in a range of from about 0mm to about 5mm, about 0.5mm to about 4.5mm, about 1mm to about 4mm, about 1.5mm to about 3.5mm, about 2mm to about 3mm, or about 2.5mm to about 3.5mm, or about 3mm.

The second device 200 may comprise a first central longitudinal axis 230 and the third device 300 may comprise a second central longitudinal axis 330, which may be separated by an angle The angle α may be in a range of from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees.

The first working surface 220 may be generally planar and may extend in a direction 231 not perpendicular to the first central longitudinal axis 230 but generally tangent to the first portion 111 of the radial outer surface 110. The second working surface 320 of the third device 300 may be generally perpendicular to the second central longitudinal axis 330 and approximately tangent to the second portion 112 of the radial outer surface 110. The direction 231 may be at an angle β1 relative to a line that is perpendicular to the first central longitudinal axis 230. The direction 431 may be at an angle β2 relative to a line that is perpendicular to the third central longitudinal axis 430. The angles β1 and β2 may be the same or different and may be from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees.

It can be seen, therefore, with reference to FIGs. 3A and 3B, that various embodiments relate to a method 1 of altering a portion 11 of a substrate 10. The method 1 may comprise providing a first device 100 comprising a radial outer surface 110. The method 1 may comprise rotating the first device 100. The method 1 may comprise providing a second device 200 comprising a source of vibration energy 210. The second device 200 may have a first working surface 220 positioned proximate to a first portion 111 of the radial outer surface 110. The second device 200 may have a first central longitudinal axis 230. The first working surface 220 may be not perpendicular to the first central longitudinal axis 230 but generally planar in a direction 231 generally tangent to the first portion 111 of the radial outer surface 110. The method 1 may comprise providing a third device 300 comprising a source of vibration energy 310. The third device 300 may have a second working surface 320 positioned proximate to a second portion 112 of the radial outer surface 110. The third device 300 may have a second central longitudinal axis 330. The second working surface 320 may be not perpendicular to the second central longitudinal axis 330 but generally planar and may extend in a direction 331 generally tangent to the second portion 112 of the radial outer surface 110. A downstream end 222 of the first working surface 220 may be positioned within about 3mm or less in a machine direction MD of an upstream end 321 of the second working surface 320. The third device 300 may be positioned downstream of the second device 200. The method 1 may comprise providing a first nip 202 between the second device 200 and the first portion 111 of the radial outer surface 110 of the first device 100. The method 1 may comprise providing a second nip 302 between the third device 300 and the second portion 112 of the radial outer surface 110 of the first device 100. The method 1 may comprise conveying a substrate 10 on the rotating first device 100 through the first nip 111 and through the second nip 112 to alter the portion 11 of the substrate 10. The second device 200 and the third device 300 may each comprise a blade sonotrode 201, 301.

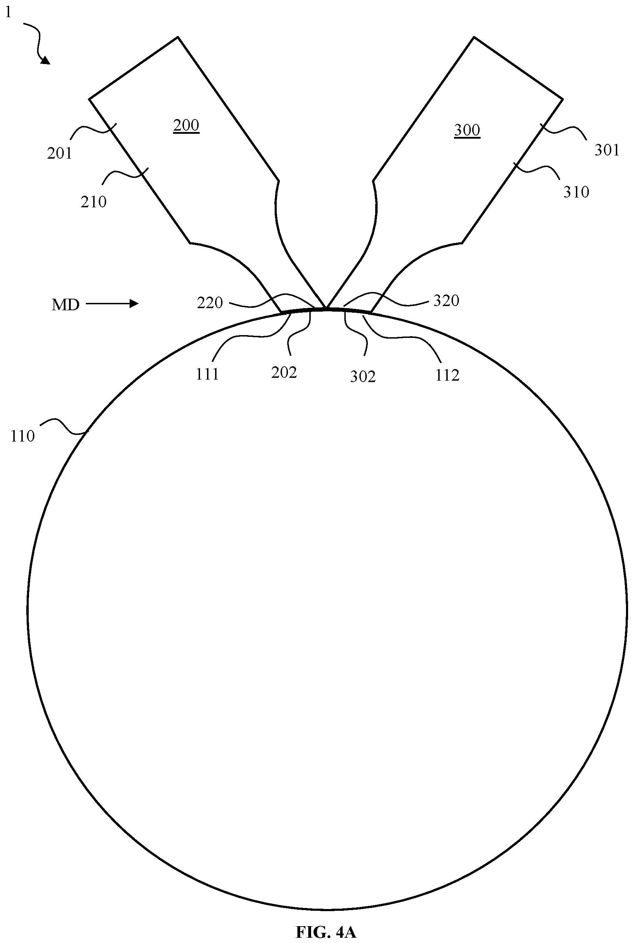

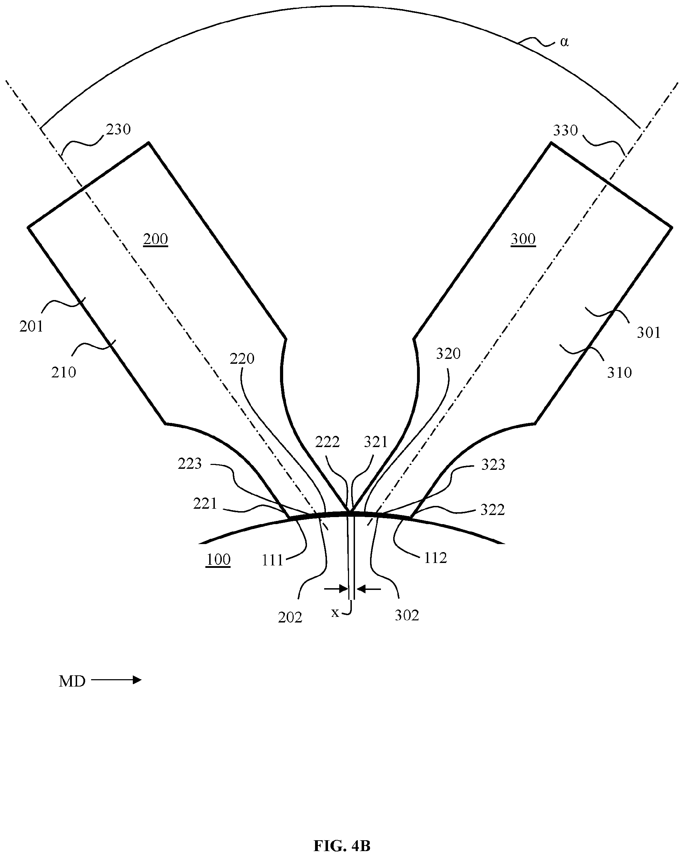

FIG. 4A and 4B cooperate to illustrate one embodiment. FIG. 4A is a schematic side view of a method 1 according to various embodiments, utilizing two sonotrodes 201, 301 having curved working surfaces 220, 320. A first nip 202 may be formed between a first working surface 220 of a second device 200 and a first portion 111 of a radial outer surface 110 of a first device 100. Similarly, a second nip 302 may be formed between a second working surface 320 of a third device 300 and a second portion 112 of the radial outer surface 110 of the first device 100. A substrate 10 (not shown) may be passed in a machine direction between the first nip 202 and the second nip 302. As in all cases, the second device 200 and the third device 300 may comprise sources of vibration energy 210, 310 and may be, for example, sonotrodes 201, 301.

FIG. 4B is an enlarged view of a portion of FIG. 4A. The first working surface 220 may comprise a first concave portion 223 and the second working surface 320 may comprise a second concave portion 323. These concave portions 223, 323 may generally mimic the shape of the radial outer surface 110 of the first device at the first portion 111 and the 2nd portion 112 respectively. Additionally, the first working surface 220 of the second device 200 may comprise an upstream end 221 and a downstream end 222. The second working surface 320 of the third device 300 may comprise an upstream end 321 and a downstream end 322. The downstream end 222 of the second device 200 may be upstream from the upstream end 321 of the third device 300 and may be separated therefrom by a distance x. The distance x may be in a range of from about 0mm to about 5mm, about 0.5mm to about 4.5mm, about 1mm to about 4mm, about 1.5mm to about 3.5mm, about 2mm to about 3mm, or about 2.5mm to about 3.5mm, or about 3mm.

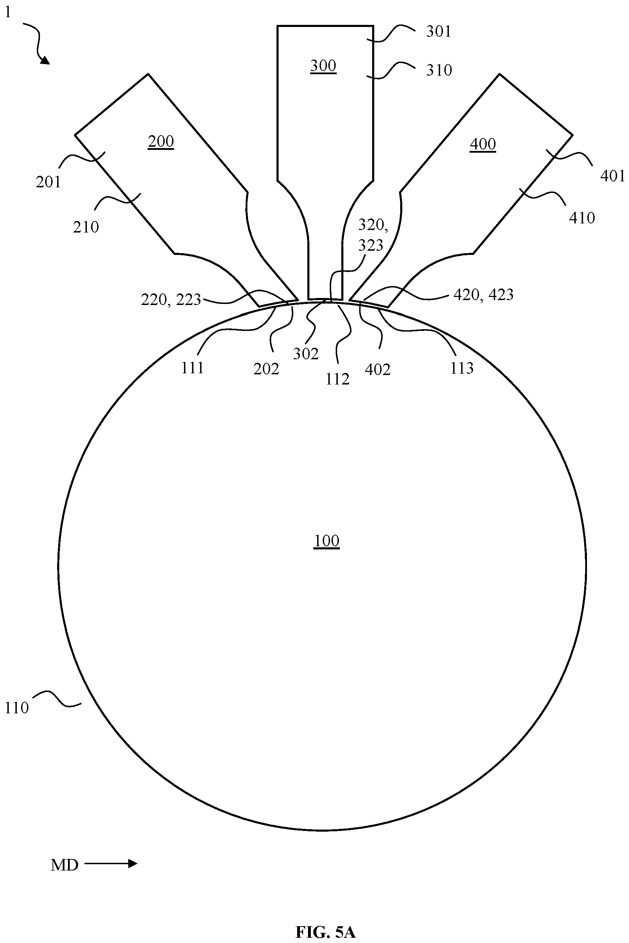

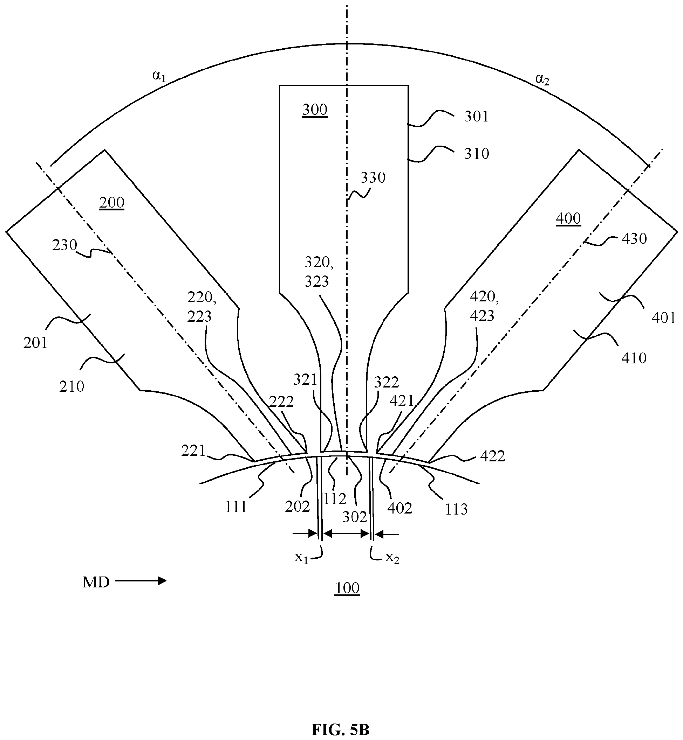

FIG. 5A and 5B cooperate to illustrate one embodiment. FIG. 5A is a schematic side view of a method 1 according to various embodiments, utilizing three sonotrodes 201, 301, 401 having curved working surfaces 220, 320, 420.

A first nip 202 may be formed between a first portion 111 of a radial outer surface 110 of a first device 100 and a first working surface 220 of a second device 200, a second nip 302 may be formed between a second portion 112 of a radial outer surface 110 of the first device 100 and a second working surface 320 of a third device 300, and a third nip 402 may be formed between a third portion 113 of a radial outer surface 110 of the first device 100 and a third working surface 420 of a fourth device 400. A substrate 10 (not shown) may be passed through all three nips in a machine direction MD. The second device 200, the third device 300, and the fourth device 400 may each comprise a source of vibration energy 210, 310, 410, and may optionally be a sonotrode 201, 301, 401.

FIG. 5B is an enlarged view of a portion of FIG. 5A. The first working surface 220 may comprise a first concave portion 223, the second working surface 320 may comprise a second concave portion 323, and the third working surface 420 may comprise a third concave portion 423. The first working surface 220 of the second device 200 may also comprise an upstream end 221 and a downstream end 222. Similarly, the second working surface 320 of the third device 300 may comprise an upstream end 321 and a downstream end 322. The third working surface 420 of the fourth device 400 may comprise an upstream end 421 and a downstream end 422. The downstream end 222 of the second device 200 may be upstream of the upstream and 321 of the third device 300 and may be separated therefrom by a distance x1. Similarly, the downstream end 322 of the third device 300 may be upstream of the upstream and 421 of the fourth device 400 and may be separated therefrom a distance x2. The distances x1 and x2 may be the same or different. Each distance x1 and x2 may be in a range of from about 0mm to about 5mm, about 0.5mm to about 4.5mm, about 1mm to about 4mm, about 1.5mm to about 3.5mm, about 2mm to about 3mm, or about 2.5mm to about 3.5mm, or about 3mm. The second device 200 may comprise a first central longitudinal axis 230 and the third device 300 may comprise a second central longitudinal axis 330, which may be separated by an angle α1. The 4th device 400 may comprise a third central longitudinal axis 430, which may be separated from the second central longitudinal axis 330 by an angle α2. The angles α1 and α2 may be the same or different and each may be in a range of from about 5 degrees to about 90 degrees, about 10 degrees to about 85 degrees, about 15 degrees to about 80 degrees, about 20 degrees to about 75 degrees, about 25 degrees to about 70 degrees, about 30 degrees to about 65 degrees, about 35 degrees to about 60 degrees, about 40 degrees to about 55 degrees, or about 45 degrees to about 50 degrees.

It can be seen, therefore, with reference to FIGs. 4A, 4B, 5A, and 5B, that various embodiments relate to a method 1 of altering a portion 11 of a substrate 10. The method 1 may comprise providing a first device 100 comprising a radial outer surface 110. The method 1 may comprise rotating the first device 100. The method 1 may comprise providing a second device 200 comprising a source of vibration energy 210. The second device 200 may have a first working surface 220 positioned proximate to a first portion 111 of the radial outer surface 110. The second device 200 may have a first central longitudinal axis 230. The first working surface 220 comprising a concave portion 223 to generally mimic the first portion 111 of the radial outer surface 110. The method 1 may comprise providing a first nip 202 between the second device 200 and the first portion 111 of the radial outer surface 110 of the first device 100. The method 1 may comprise conveying a substrate 10 in a machine direction MD on the rotating first device 100 through the first nip 202 to alter the portion 11 of the substrate 10. The method 1 may comprise providing a third device 300 comprising a source of vibration energy 310. The third device 300 may have a second working surface 320 positioned proximate to a second portion 112 of the radial outer surface 110. The third device 300 may have a first central longitudinal axis 330. The second working surface 320 comprising a second concave portion 323 to generally mimic the second portion 112 of the radial outer surface 110. A downstream end 222 of the first working surface 220 may be positioned within about 3mm or less in a machine direction MD of an upstream end 321 of the second working surface 320. The third device 300 may be positioned downstream of the second device 200. The method 1 may comprise providing a second nip 302 between the third device 300 and the second portion 112 of the radial outer surface 110 of the first device 100. The method 1 may comprise conveying the substrate 10 on the rotating first device 100 through the second nip 302 to alter the portion 11 of the substrate 10. The first working surface 220 may have a longest dimension D1 extending in a cross-machine direction CD. The first working surface 220 may have a longest dimension D1 extending in the machine direction MD.

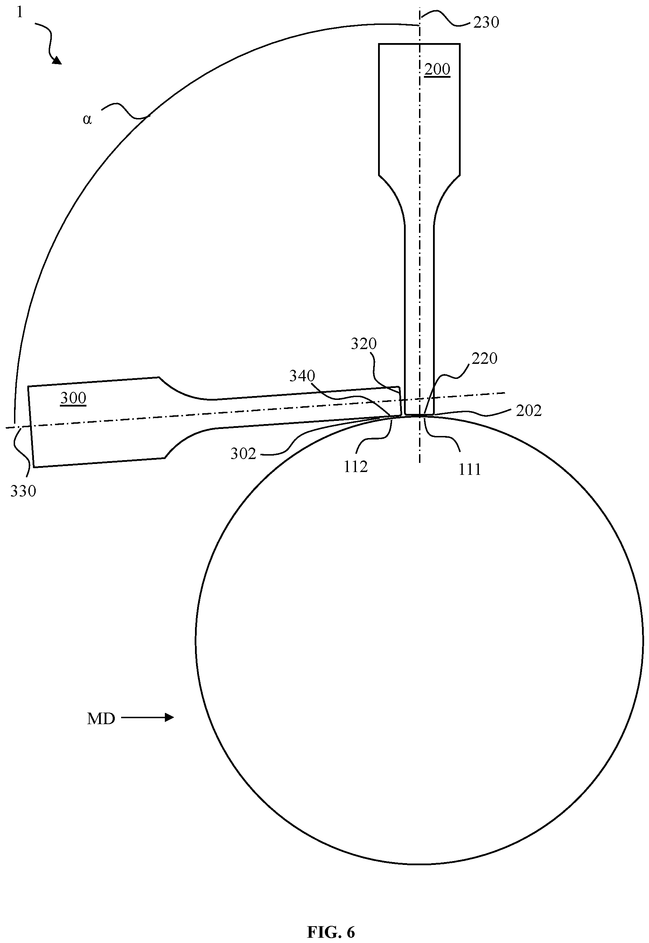

FIG. 6 is a schematic side view of a method 1 according to various embodiments, utilizing the working surface 220 of one sonotrode 201 and the side 340 of another sonotrode 301. The method 1 may comprise providing a first device 100 comprising a radial outer surface 110. The method 1 may comprise rotating the first device 100. The method 1 may comprise providing a second device 200 comprising a source of vibration energy 201. The second device 200 may have a first working surface 220 positioned proximate to a first portion 111 of the radial outer surface 110. The second device 200 may have a first central longitudinal axis 230. The first working surface 220 may be generally planar in a direction 231 generally perpendicular to the first central longitudinal axis 230. The method 1 may comprise providing a third device 300 comprising a source of vibration energy 320. The third device 300 may have a second working surface 320 directed toward the second device 200 proximal to the first working surface 220 and positioned upstream of the first portion 111 of the radial outer surface 110. The third device 300 may have a second central longitudinal axis 330 that may be generally perpendicular or transverse to the first central longitudinal axis 230 of the second device. The second working surface 320 may be generally planar and may extend in a direction generally perpendicular to the second central longitudinal axis 330. The method 1 may comprise providing a first nip 202 between the first working surface 220 of the second device 200 and the first portion 112 of the radial outer surface 110 of the first device 100. The method 1 may comprise providing a second nip 302 between a side 340 of the third device 300 and a second portion 112 of the radial outer surface 110 of the first device 100. The method 1 may comprise conveying a substrate 10 on the rotating first device 100 through the second nip 302 and through the first nip 202 to alter the portion 11 of the substrate 10. The second nip 302 may be positioned upstream in a machine direction MD from the first nip 202. The second nip 302 may be positioned downstream in a machine direction MD from the first nip 202. The second device 200 and the third device 300 may each comprise a blade sonotrode 201, 301. The second device 200 may comprise a first central longitudinal axis 230 and the third device 300 may comprise a second central longitudinal axis 330, which may be separated by an angle α. The angle α may be from about 90 degrees to about 120 degrees, about 95 degrees to about 115 degrees, about 100 degrees to about 110 degrees, or about 105 degrees.

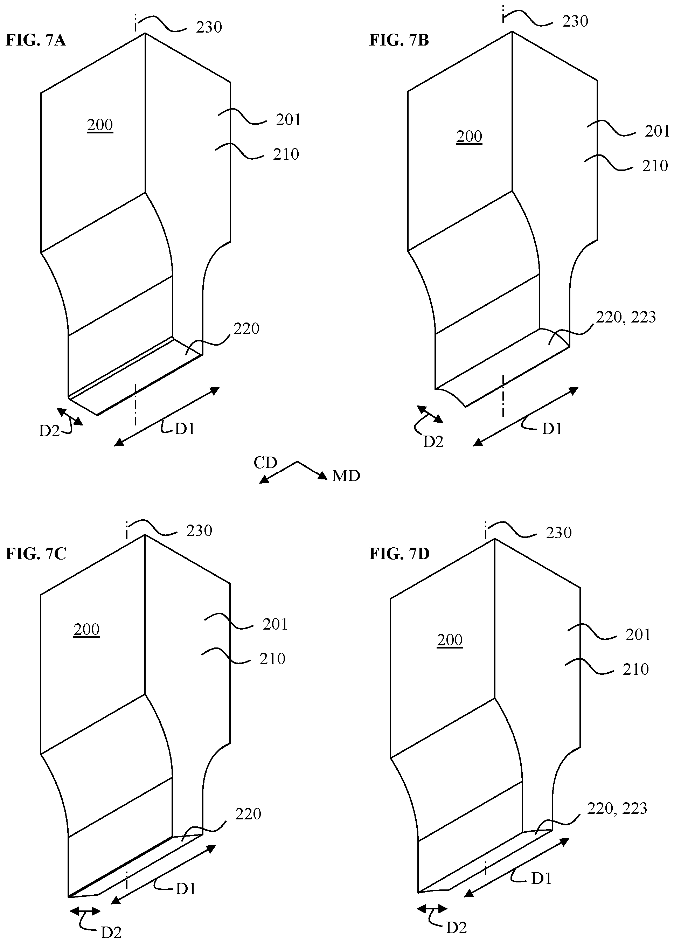

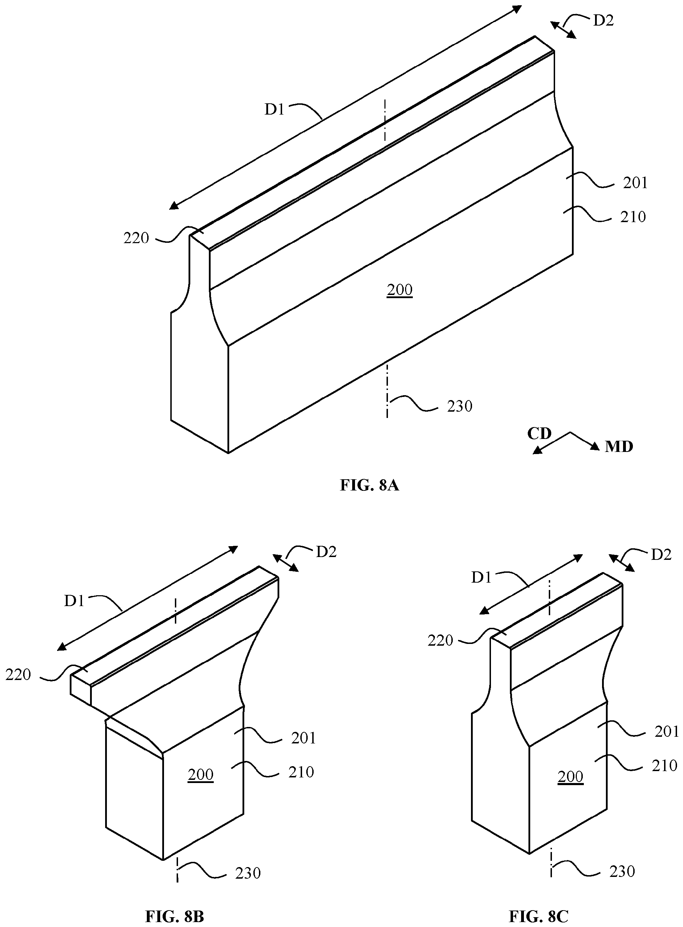

FIG. 7A, 7B, 7C, 7D, 8A, 8B, and 8C are each perspective views of a device 200 comprising a source of vibration energy 210. In all cases, the device 200 may be a sonotrode 201. In FIGs. 7A, 8A, 8B, and 8C, the device 200 comprises a flat working surface 220 that is generally perpendicular to a central longitudinal axis 230. In FIG. 7B, the device 200 comprises a working surface 220 that has a curved portion 223. The curved portion 223 is not disposed at an angle relative to the central longitudinal axis 230, meaning that the curved portion 223 is defined by a radius having an origin that lies along the central longitudinal axis 230. In FIG. 7C, the device 200 comprises a working surface that is disposed at an angle relative to the central longitudinal axis 230. In FIG. 7D, the device 200 comprises a working surface 220 that has a curved portion 223 that is also disposed at an angle relative to the central longitudinal axis 230, meaning that the curved portion 223 is defined by a radius having an origin that does not lie along the central longitudinal axis 230. FIG. 8A shows a device 200 having a having an elongated working surface 220 without any winged portions. FIG. 8B is a perspective view of a device 200 having a winged working surface 220. FIG. 8C is a perspective view of a device 200 having a partially winged working surface 220. In each case, the working surface 220 comprises a first dimension D1 and a second dimension D2. The first dimension D1 may be greater than the second dimension D2. The first dimension D1 may be substantially aligned with a cross-machine direction CD and the second dimension D2 may be substantially aligned with a machine direction MD, when the device 200 is employed in a method 1 according to various embodiments.

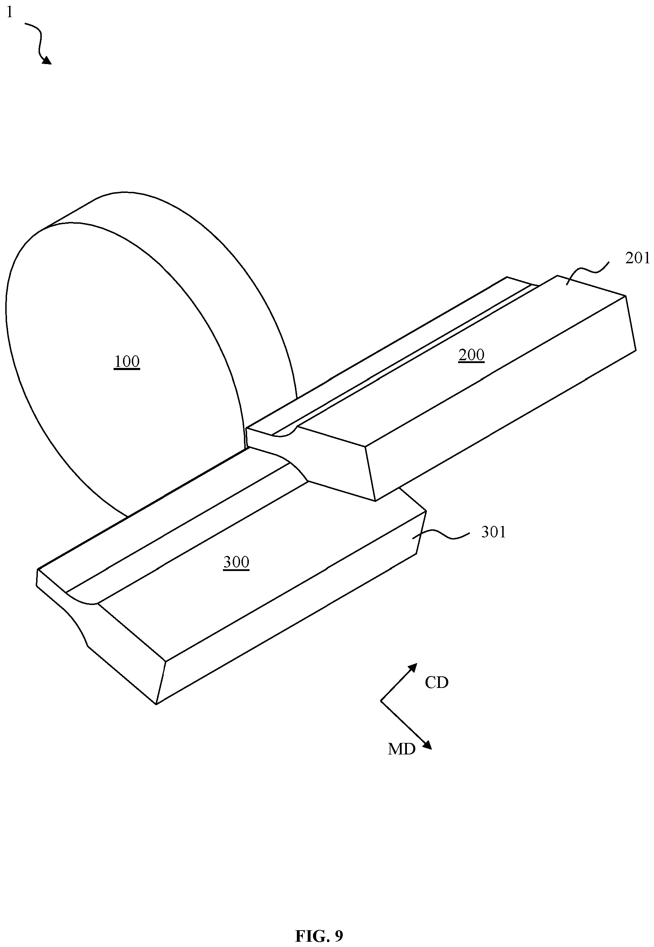

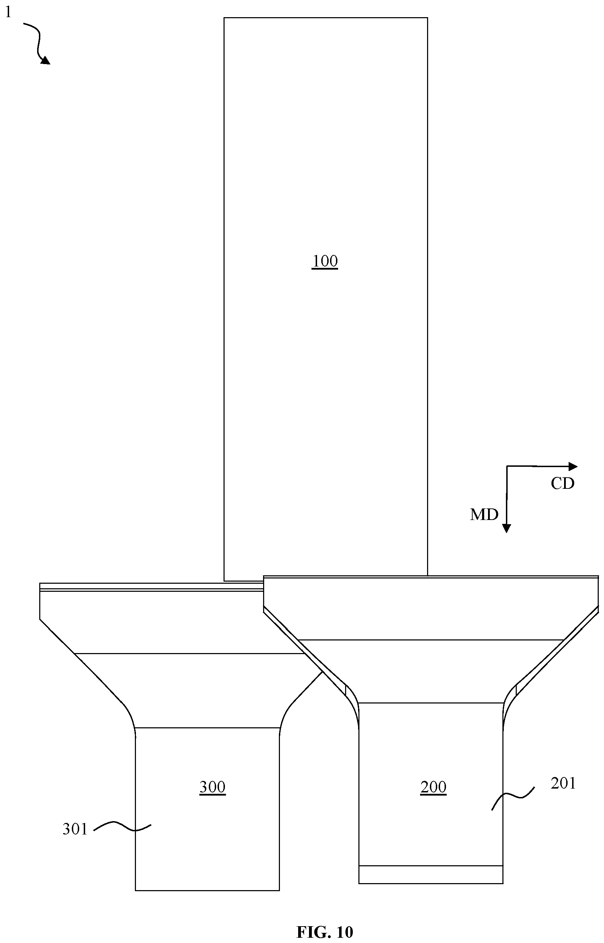

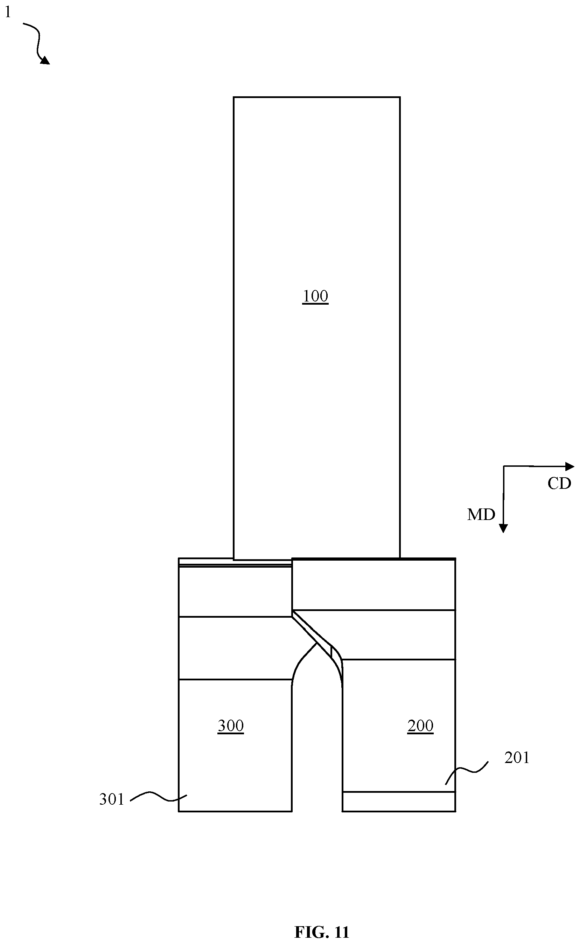

FIG. 9, 10, and 11 cooperate to illustrate similar embodiments utilizing overlapping sonotrodes. FIG. 9 is a perspective view of a method 1 according to various embodiments, utilizing a pair of overlapping sonotrodes 201, 301 of the type shown in FIG. 8A. FIG. 10 is a perspective view of a method 1 according to various embodiments, utilizing a pair of overlapping sonotrodes 201, 301 of the type shown in FIG. 8B. FIG. 11 is a perspective view of a method 1 according to various embodiments, utilizing a pair of overlapping sonotrodes 201, 301 of the type shown in FIG. 8C. It can be seen, therefore, with reference to FIGs. 8A, 8B, 8C, 9, 10, and 11, that various embodiments relate to a method 1 of altering a portion 11 of a substrate 10. The method 1 may comprise providing a first device 100 comprising a radial outer surface 110. The method 1 may comprise rotating the first device 100. The method 1 may comprise providing a second device 200 comprising a source of vibration energy 210. The second device 200 may have a first working surface 220 positioned proximate to a first portion 111 of the radial outer surface 110. The second device 200 may have a first central longitudinal axis 230. The first working surface 220 may be generally planar in a direction 231 generally perpendicular to the first central longitudinal axis 230. The method 1 may comprise providing a third device 300 comprising a source of vibration energy 310. The third device 300 may have a second working surface 320 positioned proximate to a second portion 112 of the radial outer surface 110. The third device 300 may have a second central longitudinal axis 330. The second working surface 320 may be generally planar and may extend in a direction 331 generally perpendicular to the second central longitudinal axis 330. The second working surface 320 may be positioned downstream in a machine direction MD from the first working surface 111. The first working surface 111 and the second working surface 112 both extend further in a cross-machine direction CD than in the machine direction MD. A downstream end 222 of the first working surface 220 may be positioned within about 3mm or less in the machine direction MD of an upstream end 321 of the second working surface 320. The method 1 may comprise providing a first nip 202 between the second device 200 and the first portion 111 of the radial outer surface 110 of the first device 100. The method 1 may comprise providing a second nip 302 between the third device 300 and the second portion 112 of the radial outer surface 110 of the first device 100. The method 1 may comprise conveying a substrate 10 on the rotating first device 100 through the first nip 202 and through the second nip 302 to alter the portion 11 of the substrate 10. The first working surface 220 only partially overlaps the second working surface 320 in the cross-machine direction CD. The second device 200 and the third device 300 may each comprise a blade sonotrode 201, 301.

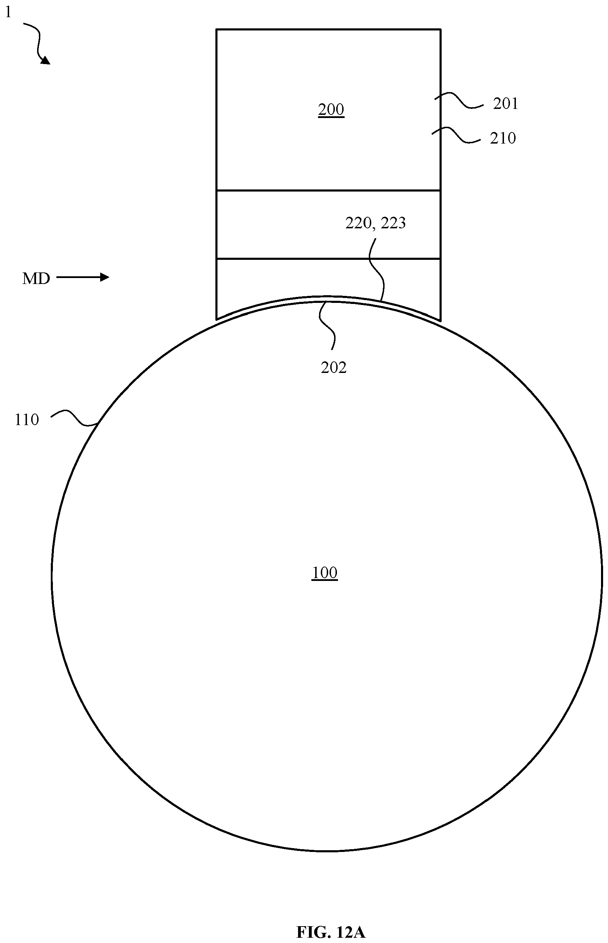

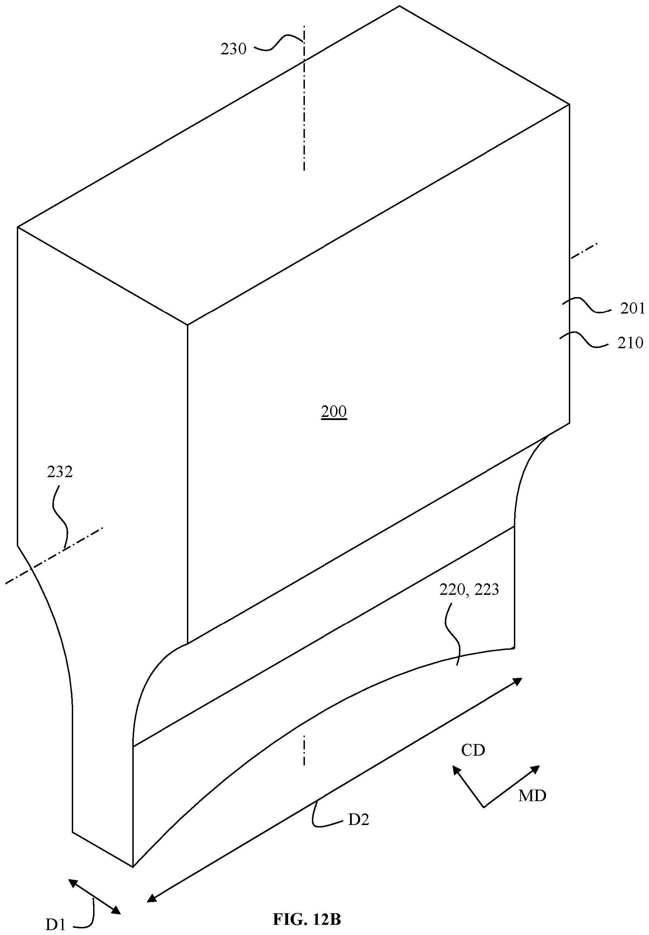

FIG. 12A and 12B cooperate to illustrate one embodiment. FIG. 12A is a schematic side view of a method 1 according to various embodiments, utilizing a sonotrode 201 having working surface 220 comprising a curved portion 223 that is curved in the machine direction MD rather than in the cross-machine direction, as shown, for example in FIGs. 4A, 4B, 5A, and 5B. As in other embodiments, a first nip 202 may be formed between a radial outer surface 110 of a first device 100 and a working surface 220 of a second device 200. The curved portion 223 of the working surface 220 may generally mimic the curvature of the radial outer surface 110 of the first device 200. A substrate 10 (not shown) may be passed through the first nip 202. When the curved portion 223 of the working surface 220 generally mimics the curvature of the radial outer surface 110 of the first device 200, the substrate 10 may be exposed to energy within the nip for a longer duration compared to embodiments in which the working surface 220 is less conformed to the curvature of the radial outer surface 110.

FIG. 12B is a perspective view of a sonotrode 201 shown in FIG. 12A. As shown on the device may be a sonotrode 201 comprising a central longitudinal axis 230 and a central lateral axis 232. The working surface 220 may have a first dimension D1 and a second dimension D2. The first dimension D1 may extend in the cross direction CD and the second dimension D2 may extend in the machine direction MD when the device 200 is employed in a method 1 according to various embodiments. The second dimension D2 may be greater than the first dimension D1. The curve portioned 223 may extend along the second dimension such that the working surface 220 is not planar along the second direction D2. According to various embodiments D1 may be in a range of from about 5mm to about 30mm, or about 10mm to about 25mm, or about 15mm to about 20mm. Thus, the sonotrode 201 may be a blade sonotrode as opposed to a block sonotrode, which may enable a higher amplitude. It is to be appreciated that a "blade sonotrode" refers to a specialized ultrasonic welding tool characterized by its slender, elongated shape, akin to a blade or horn. This design feature enables the precise transmission of high-frequency mechanical vibrations to a limited contact area, making it ideal for applications demanding meticulous and intricate welding of thin or delicate materials, such as electronics, medical devices, and jewelry. Conversely, a "block sonotrode" is defined as an ultrasonic welding tool with a square or rectangular configuration, offering a larger contact area for the even distribution of high-frequency vibrations. Block sonotrodes excel in applications requiring the formation of robust and secure welds on thicker and larger materials, frequently found in industries like automotive, packaging, and construction for joining plastic components, metals, and other heavy materials.

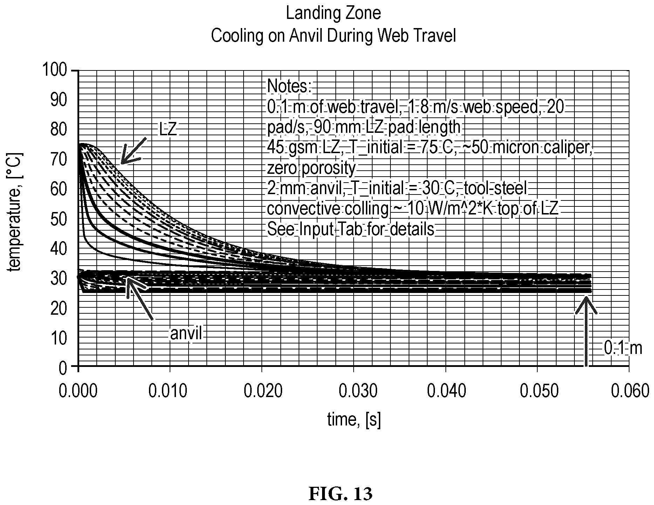

FIG. 13 is a graph providing details of the discovery of a rapid decrease in temperature of a substrate 10 after leaving a nip 202. The X axis represents time after bonding in a nip, such as nip 202. The Y axis represents a temperature of the altered portion 11 of the substrate 10 at the end of formation after exiting sonotrode. This data shows how quickly the substrate cools upon exiting the nip 202. The curves represent different locations through the thickness of the substrate. About 50% of heat can be lost in 10 milliseconds.

### Examples/Combinations 1:

1. A method of altering a portion of a substrate, comprising:
   providing a first device comprising a radial outer surface;
   rotating the first device;
   providing a second device comprising a source of vibration energy, the second device having a first working surface positioned proximate to a first portion of the radial outer surface, the second device having a first central longitudinal axis, the first working surface being generally planar in a direction generally perpendicular to the first central longitudinal axis;
   providing a third device comprising a source of vibration energy, the third device having a second working surface directed toward the second device proximal to the first working surface and positioned upstream of the first portion of the radial outer surface, the third device having a second central longitudinal axis that is generally perpendicular or transverse to the first central longitudinal axis of the second device, the second working surface being generally planar and extending in a direction generally perpendicular to the second central longitudinal axis;
   providing a first nip between the first working surface of the second device and the first portion of the radial outer surface of the first device; and
   providing a second nip between a side of the third device and a second portion of the radial outer surface of the first device; and
   conveying a substrate on the rotating first device through the second nip and through the first nip to alter the portion of the substrate.
2. The method of Paragraph 1, wherein the second nip is positioned upstream in a machine direction from the first nip.
3. The method of Paragraph 1, wherein the second nip is positioned downstream in a machine direction from the first nip.
4. The method of any one of Paragraphs 1-3, wherein the second device and the third device each comprise a blade sonotrode.
5. A method of altering a portion of a substrate, comprising:
   providing a first device comprising a radial outer surface;
   rotating the first device;
   providing a second device comprising a source of vibration energy, the second device having a first working surface positioned proximate to a first portion of the radial outer surface, the second device having a first central longitudinal axis, the first working surface being generally planar in a direction generally perpendicular to the first central longitudinal axis;
   providing a third device comprising a source of vibration energy, the third device having a second working surface positioned proximate to a second portion of the radial outer surface, the third device having a second central longitudinal axis, the second working surface being generally planar and extending in a direction generally perpendicular to the second central longitudinal axis;
   wherein the second working surface is positioned downstream in a machine direction from the first working surface, wherein the first working surface and the second working surface both extend further in a cross-machine direction than in the machine direction;
   wherein a downstream end of the first working surface is positioned within about 3mm or less in the machine direction of an upstream end of the second working surface;
   providing a first nip between the second device and the first portion of the radial outer surface of the first device;
   providing a second nip between the third device and the second portion of the radial outer surface of the first device; and
   conveying a substrate on the rotating first device through the first nip and through the second nip to alter the portion of the substrate.
6. The method of Paragraph 5, wherein the first working surface only partially overlaps the second working surface in the cross-machine direction, and wherein the second device and the third device each comprise a blade sonotrode.

### Examples/Combinations 2:

1. A method of altering a portion of a substrate, comprising:
   providing a first device comprising a radial outer surface;
   rotating the first device;
   providing a second device comprising a source of vibration energy, the second device having a first working surface positioned proximate to a first portion of the radial outer surface, the second device having a first central longitudinal axis, the first working surface being not perpendicular to the first central longitudinal axis but generally planar in a direction generally tangent to the first portion of the radial outer surface;
   providing a third device comprising a source of vibration energy, the third device having a second working surface positioned proximate to a second portion of the radial outer surface, the third device having a second central longitudinal axis, the second working surface being not perpendicular to the second central longitudinal axis but generally planar and extending in a direction generally tangent to the second portion of the radial outer surface; and
   wherein a downstream end of the first working surface is positioned within about 3mm or less in a machine direction of an upstream end of the second working surface, and wherein the third device is positioned downstream of the second device;
   providing a first nip between the second device and the first portion of the radial outer surface of the first device;
   providing a second nip between the third device and the second portion of the radial outer surface of the first device; and
   conveying a substrate on the rotating first device through the first nip and through the second nip to alter the portion of the substrate.
2. The method of Paragraph 1, wherein the second device and the third device each comprise a blade sonotrode.
3. A method of altering a portion of a substrate, comprising:
   providing a first device comprising a radial outer surface;
   rotating the first device;
   providing a second device comprising a source of vibration energy, the second device having a first working surface positioned proximate to a first portion of the radial outer surface, the second device having a first central longitudinal axis, the first working surface comprising a concave portion to generally mimic the first portion of the radial outer surface;
   providing a first nip between the second device and the first portion of the radial outer surface of the first device; and
   conveying a substrate in a machine direction on the rotating first device through the first nip to alter the portion of the substrate.
4. The method of Paragraph 3, comprising providing a third device comprising a source of vibration energy, the third device having a second working surface positioned proximate to a second portion of the radial outer surface, the third device having a first central longitudinal axis, the second working surface comprising a second concave portion to generally mimic the second portion of the radial outer surface.
5. The method of Paragraph 4, wherein a downstream end of the first working surface is positioned within about 3mm or less in a machine direction of an upstream end of the second working surface, and wherein the third device is positioned downstream of the second device, comprising:
   providing a second nip between the third device and the second portion of the radial outer surface of the first device;
   conveying the substrate on the rotating first device through the second nip to alter the portion of the substrate.
6. The method of Paragraph 3, wherein the first working surface has a longest dimension extending in a cross-machine direction.
7. The method of Paragraph 3, wherein the first working surface has a longest dimension extending in the machine direction.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of altering a portion of a substrate, comprising:
providing a first device comprising a radial outer surface;
rotating the first device;
providing a second device comprising a source of vibration energy, the second device having a first working surface positioned proximate to a first portion of the radial outer surface, the second device having a first central longitudinal axis, the first working surface being generally planar in a direction generally perpendicular to the first central longitudinal axis;
providing a third device comprising a source of vibration energy, the third device having a second working surface positioned proximate to a second portion of the radial outer surface, the third device having a second central longitudinal axis, the second working surface being generally planar and extending in a direction not perpendicular to the second central longitudinal axis but generally tangent to the second portion of the radial outer surface;
wherein a downstream end of the first working surface is positioned within about 3mm or less in a machine direction of an upstream end of the second working surface, and wherein the third device is positioned downstream of the second device;
providing a first nip between the second device and the first portion of the radial outer surface of the first device;
providing a second nip between the third device and the second portion of the radial outer surface of the first device; and
conveying a substrate on the rotating first device through the first nip and through the second nip to alter the portion of the substrate.

2. The method of Claim 1, comprising providing a fourth device comprising a source of vibration energy, the fourth device having a third working surface positioned proximate to a third portion of the radial outer surface, the third portion of the radial outer surface being positioned upstream of the first portion of the radial outer surface, the fourth device having a third central longitudinal axis, the third working surface being generally planar and extending in a direction not perpendicular to the third central longitudinal axis but generally tangent to the third portion of the radial outer surface; and
wherein a downstream end of the third working surface is positioned within about 3mm or less in the machine direction of an upstream end of the first working surface, and wherein the fourth device is positioned upstream of the second device.

3. The method of Claim 2, comprising providing a third nip between the fourth device and the third portion of the radial outer surface, and conveying the substrate on the rotating first device through the third nip to alter the portion of the substrate.

4. The method of Claim 1, comprising imparting thermal energy to a portion of the substrate upstream of the first nip to heat the portion of the substrate to a temperature near or below a melting temperature of the portion of the substrate.

5. The method of any one of the preceding claims, wherein the substrate comprises more than one layers or more than one material.

6. The method of any one of the preceding claims, comprising providing a plurality of recesses in the radial outer surface of the first device, wherein the recesses have a shape configured to produce protrusions in the altered areas.

7. The method of any one of the preceding claims, wherein the second device and the third device each comprise a blade sonotrode.

8. A method of altering a portion of a substrate, comprising:
providing a first device comprising a radial outer surface;
rotating the first device;
providing a second device comprising a source of vibration energy, the second device having a first working surface positioned proximate to a first portion of the radial outer surface, the second device having a first central longitudinal axis, the first working surface being not perpendicular to the first central longitudinal axis but generally planar in a direction generally tangent to the first portion of the radial outer surface;
providing a third device comprising a source of vibration energy, the third device having a second working surface positioned proximate to a second portion of the radial outer surface, the third device having a second central longitudinal axis, the second working surface being not perpendicular to the second central longitudinal axis but generally planar and extending in a direction generally tangent to the second portion of the radial outer surface; and
wherein a downstream end of the first working surface is positioned within about 3mm or less in a machine direction of an upstream end of the second working surface, and wherein the third device is positioned downstream of the second device;
providing a first nip between the second device and the first portion of the radial outer surface of the first device;
providing a second nip between the third device and the second portion of the radial outer surface of the first device; and
conveying a substrate on the rotating first device through the first nip and through the second nip to alter the portion of the substrate.

9. The method of Claim 8, wherein the second device and the third device each comprise a blade sonotrode.

10. A method of altering a portion of a substrate, comprising:
providing a first device comprising a radial outer surface;
rotating the first device;
providing a second device comprising a source of vibration energy, the second device having a first working surface positioned proximate to a first portion of the radial outer surface, the second device having a first central longitudinal axis, the first working surface comprising a concave portion to generally mimic the first portion of the radial outer surface;
providing a first nip between the second device and the first portion of the radial outer surface of the first device; and
conveying a substrate in a machine direction on the rotating first device through the first nip to alter the portion of the substrate.

11. The method of Claim 10, comprising providing a third device comprising a source of vibration energy, the third device having a second working surface positioned proximate to a second portion of the radial outer surface, the third device having a first central longitudinal axis, the second working surface comprising a second concave portion to generally mimic the second portion of the radial outer surface.

12. The method of Claim 11, wherein a downstream end of the first working surface is positioned within about 3mm or less in a machine direction of an upstream end of the second working surface, and wherein the third device is positioned downstream of the second device, comprising:
providing a second nip between the third device and the second portion of the radial outer surface of the first device;
conveying the substrate on the rotating first device through the second nip to alter the portion of the substrate.

13. The method of Claim 10, wherein the first working surface has a longest dimension extending in a cross-machine direction.

14. The method of Claim 10, wherein the first working surface has a longest dimension extending in the machine direction.
